Europäisches Patentamt

European Patent Office

Office européen des brevets

(11) Numéro de publication: **0 186 535**
**B1**

# (12) FASCICULE DE BREVET EUROPÉEN

(45) Date de publication du fascicule du brevet:
**08.06.88**

(21) Numéro de dépôt: **85402189.6**

(22) Date de dépôt: **13.11.85**

(51) Int. Cl.⁴: **F 16 D 65/56**

(54) **Appareil d'accouplement par friction à rattrapage d'usure, tel que frein notamment.**

(30) Priorité: **13.11.84 FR 8417302**

(43) Date de publication de la demande:
**02.07.86 Bulletin 86/27**

(45) Mention de la délivrance du brevet:
**08.06.88 Bulletin 88/23**

(84) Etats contractants désignés:
**DE GB IT**

(56) Documents cité:
**EP-A-0 039 479**
**DE-A-2 628 206**
**FR-A-2 030 689**
**FR-A-2 548 310**
**US-A-4 384 638**

(73) Titulaire: **VALEO, 64 Avenue de la Grande Armée,
F-75017 Paris (FR)**

(72) Inventeur: **Villata, Gino, Via Moriondo 32, I-14021
Buttigliera d'Asti (IT)**

(74) Mandataire: **CABINET BONNET- THIRION, 95
Boulevard Beaumarchais, F-75003 Paris (FR)**

EP 0 186 535 B1

## Description

La présente invention se rapporte à un appareil d'accouplement par friction à rattrapage d'usure, tel que frein notamment, comprenant des moyens de friction et des moyens de rattrapage de l'usure de ces derniers. L'invention porte plus précisément sur la structure de ces moyens rattrapeurs d'usure.

Un tel appareil d'accouplement, destiné à accoupler par friction un support auquel il est lié à une pièce extérieure animée d'un mouvement relatif par rapport à ce support, comporte, pour appliquer ses moyens de friction contre ladite pièce extérieure, un élément de serrage attelé à un poussoir adapté à se déplacer en avant ou en arrière sous l'action d'un élément de commande. Le principe du rattrapage d'usure consiste à maintenir à une valeur sensiblement constante la course aller-retour de cet élément de serrage tout en rapprochant progressivement, en moyenne, cet élément de serrage de la pièce extérieure au fur et à mesure de l'usure des moyens de friction. En pratique les moyens de friction sont répartis de part et d'autre de cette pièce extérieure en sorte de pincer cette dernière.

L'invention s'applique notamment mais non exclusivement, au cas des freins à disque pour lesquels les consignes de sécurité sont très sévères dans la me sure où, même lors que ces freins sont destinés à servir de freins de parc (ou de stationnement) ils doivent également pouvoir servir de frein de sécurité. Cela impose de prévoir un rattrapage automatique de l'usure des garnitures de friction de ces freins, contrairement au cas des freins à tambour dont les mâchoires ne s'usent pas aussi rapidement.

Les appareils d'accouplement par friction à rattrapage d'usure sont généralement de construction complexe et délicate.

C'est pour pallier cet inconvénient que la Demanderesse a proposé un appareil d'accouplement simple, commode et fiable qui comporte un poussoir expansible dont l'expansion est commandée par une roue à rochet dont le cliquet est attelé à l'élément de commande; cette roue agit sur le poussoir expansible par l'intermédiaire d'un organe de transmission qui est lié, par trois liaisons à glissement sous serrage taré, respectivement, à la roue à rochet, au cliquet, et à une partie du poussoir de telle façon que cet organe de transmission reste immobile par rapport à ladite partie de poussoir lorsque le cliquet se déplace sans la roue a rochet mais soit entraîné lorsque le cliquet et la roue à rochet se déplacent ensemble. Cet organe de transmission est en pratique un arbre, disposé transversalement vis-à-vis du poussoir, qui commande le dévissage, au sein de ce poussoir, d'une vis fixe axialement par rapport à un écrou bloqué en rotation; les liaisons à glissement sous serrage taré y sont soumises à un organe de tarage élastique à action axiale, parallèlement à l'arbre de transmission; et la valeur de la course allerretour de l'élément de serrage, monté à l'avant du poussoir, oscille entre deux valeurs dont l'écart est défini par la longueur des dents de la roue à rochet. Le rattrapage d'usure y est donc discontinu.

Par ailleurs, la demande de Brevet Européen N° 0039479 décrit un système de rattrapage d'usure dans un frein dans lequel la commande d'expansion du poussoir est transmise par deux ressorts montés coaxialement audit poussoir. Cependant, l'agencement est tel que les deux ressorts opèrent en même temps, dans le but de limiter le couple, de sorte que le rattrapage d'usure éventuel se fait à l'aller de la course de freinage.

La présente invention a pour objet un appareil d'accouplement par friction à rattrapage d'usure qui, tout en étant simple, commode et fiable, soit adapté, avec un nombre d'éléments aussi réduit que possible, à assurer un rattrapage d'usure continu et pendant le retour de la course de freinage.

L'invention propose à cet effet un appareil d'accouplement par friction à rattrapage d'usure, tel que par exemple un frein destiné à accoupler par friction un étrier auquel il est lié à une pièce extérieure telle que par exemple un disque, comportant des moyens de friction adaptés à porter à volonté contre ladite pièce extérieure et un dispositif de rattrapage de l'usure de ces moyens de friction, adapté à maintenir à une valeur sensiblement constante la course aller-retour d'un élément de serrage lié à un poussoir expansible actionné par un élément de commande, ce poussoir expansible étant adapté, en cas d'usure desdits moyens de friction à s'allonger sous la commande d'un organe rotatif logé dans le dit poussoir et couplé par pignonnerie à un élément de celui-ci, cet organe rotatif étant par ailleurs couplé par un mécanisme audit élément de commande, caractérisé en ce que ce mécanisme comporte deux éléments de frottement circonférentiel à effets unidirectionnels opposés dont l'un lié au poussoir est monté sur ledit organe rotatif dans une position tendant à le bloquer en rotation par rapport au poussoir lors d'un déplacement aller de ce dernier et dont l'autre lié audit élément de commande est monté sur ledit organe rotatif dans une position tendant à l'entraîner en rotation, lors d'un déplacement de retour dudit poussoir, dans un sens tendant à provoquer l'allongement de ce poussoir et en ce que ledit mécanisme comporte des moyens pour absorber les sollicitations dudit élément de commande lorsque la course dudit poussoir est inférieure à une valeur donnée.

Pour absorber les sollicitations de l'élément de commande lorsque la course de freinage est normale, le mécanisme précité peut comporter un élément flexible et/ou un jeu fonctionnel dans sa liaison avec le poussoir.

On notera que compte tenu de l'entraînement par frotte ment de l'organe rotatif par l'élément de commande sans l'intermédiaire d'une quelconque roue à rochet, l'invention permet un rattrapage d'usure continu; en outre l'invention ne nécessite la mise en oeuvre que de deux liaisons par frottement grâce aux effets circonférentiels unidirectionnels de celles-ci; on notera que l'action par frottement de ces moyens résulte d'un phiénomène de serrage radial.

L'invention préconise que les moyens de frottement circonférentiel à effet unidirectionnel soient constitués chacun par au moins 2/3 de spire d'un ressort qui ceinture le corps rotatif et en assure la rotation, le cas échéant, en l'"étranglant". En pratique, ces moyens de frottement circonférentiel peuvent avoir des effets unidirectionnels opposés tout en comportant des spires enroulées dans le même sens.

Selon une disposition avantageuse de l'invention l'organe rotatif comporte un arbre rotatif, adapté à commander l'expansion du poussoir, et une douille montée coulissante sur cet arbre, sur laquelle sont engagés les moyens de frottement circonférentiel à effet unidirectionnel, et qui est attelée en rotation à cet arbre rotatif par un moyen de frottement circonférentiel à effet unidirectionnel, lié à la douille et engagé sur ledit arbre, adapté à ne transmettre à cet arbre que des couples tendant à le faire tourner dans ledit sens de rotation prédéterminé (et réciproquement). Le moyen de frottement circonférentiel comporte avantageusement, comme précédemment, au moins 2/3 de spire d'un ressort adapté à ceinturer l'arbre rotatif. Une telle liaison unidirectionnelle entre la douille et l'arbre rotatif assure une sauvegarde des divers éléments de rattrapage d'usure en cas d'efforts successifs subis notamment par l'arbre rotatif. On notera que cette liaison permet en outre un réglage manuel de la position angulaire dudit arbre rotatif, lors d'un remplacement des moyens de friction par exemple, au cours duquel il faut raccourcir le poussoir.

Il convient de noter que, comme dans la solution précédemment proposée par la Demanderesse, le rattrapage d'usure intervient, non pas dans la chaîne mécanique principale de commande du poussoir, mais dans une chaîne mécanique dérivée où les efforts mis en oeuvre sont bien plus faibles (1000 fois plus faible par exemple), car cette chaîne sert uniquement au système de rattrapage d'usure et non à la transmission des efforts de serrage. En outre, si les organes de rattrapage d'usure venaient a céder, cela n'empêcherait pas l'appareil d'accouplement de fonctionner, au moins provisoirement.

D'autres objets, caractéristiques et avantages de l'invention ressortent de la description qui suit, donnée à titre d'exemple non limitatif, en regard des dessins annexés sur lesquels:

la figure 1 est une vue latérale en perspective d'un appareil d'accouplement par friction selon l'invention ;

la figure 2 en est une vue latérale de côté selon la flèche II de la figure 1;

la figure 3 en est une vue de dessous selon la flèche III de la figure 1;

la figure 4 en est une vue en coupe partielle selon la ligne brisée IV-IV de la figure 3;

la figure 5 en est une autre vue en coupe partielle selon la ligne brisée V-V de la figure 4;

la figure 6 en est, à plus grande chelle, une vue partielle en coupe transversale selon la ligne VI-VI de la figure 4; et

la figure 7 est une vue en perspective éclatée du détail de la figure 6.

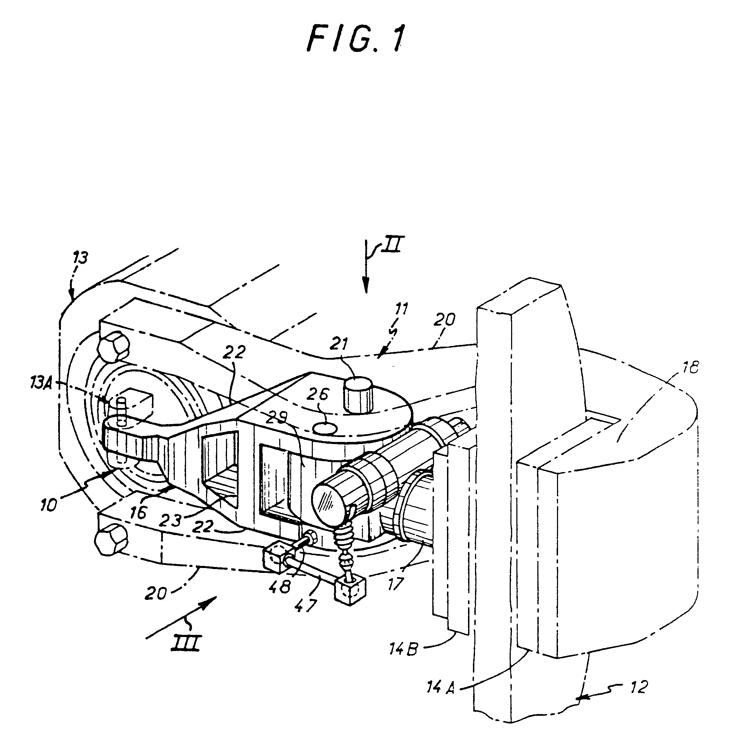

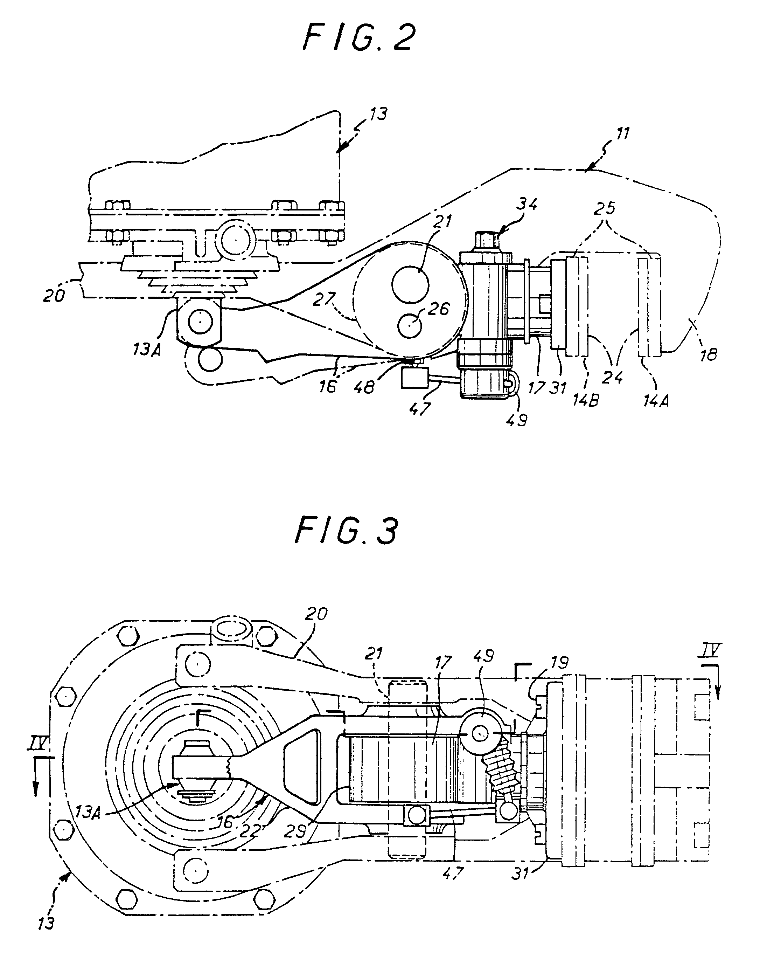

La forme d'exécution représentée aux figures 1 à 7 concerne, à titre d'exemple non limitatif, une application de l'invention à un frein à disque pour un freinage de stationnement, notamment pour un véhicule automobile. La chaîne mécanique de commande du frein comporte un dispositif de rattrapage d'usure.

Ce frein à disque comporte un appareil d'accouplement par friction 10 comportant un support constitué par un étrier 11, et un disque 12 destiné à être accouplé audit étrier, à volonté, sous l'action d'un dispositif de commande 13 tel qu'un vérin hydraulique par exemple commandé lui-même par un levier de frein à main accessible au conducteur du véhicule. On comprendra qu'en fait d'accouplement, l'appareil d'accouplement 10 a ici pour fonction d'accoupler le disque à l'étrier 11, c'est-à-dire de l'immobiliser.

L'appareil d'accouplement par friction 10 comporte des moyens de friction 14A et 14B constitués par des plaquettes de frein, adaptés à venir se plaquer de part et d'autre du disque 12 sur des pistes de frottement ménagées sur ce dernier.

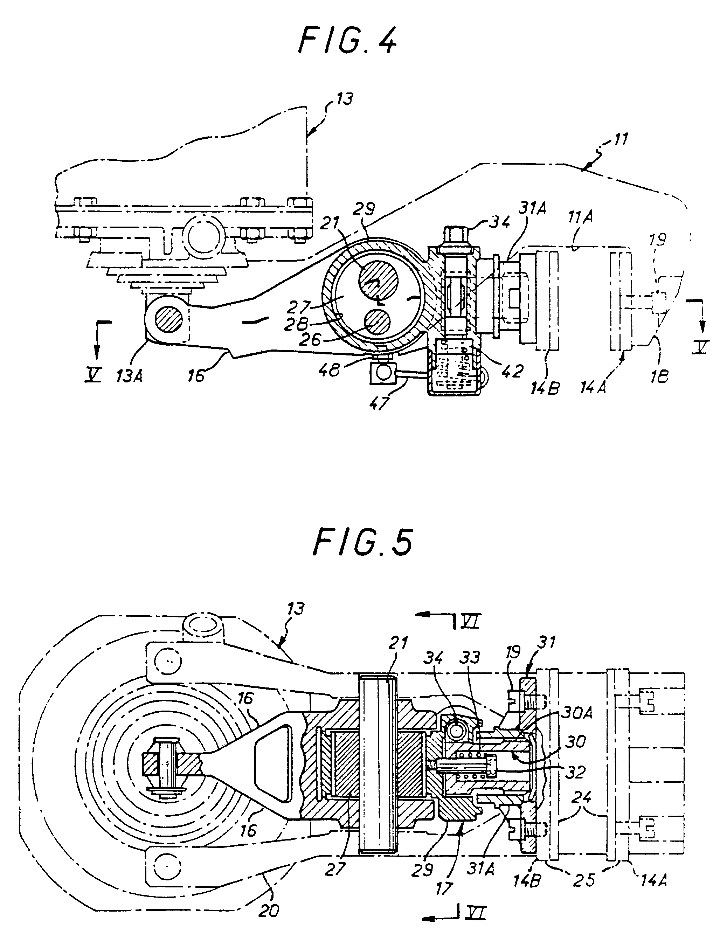

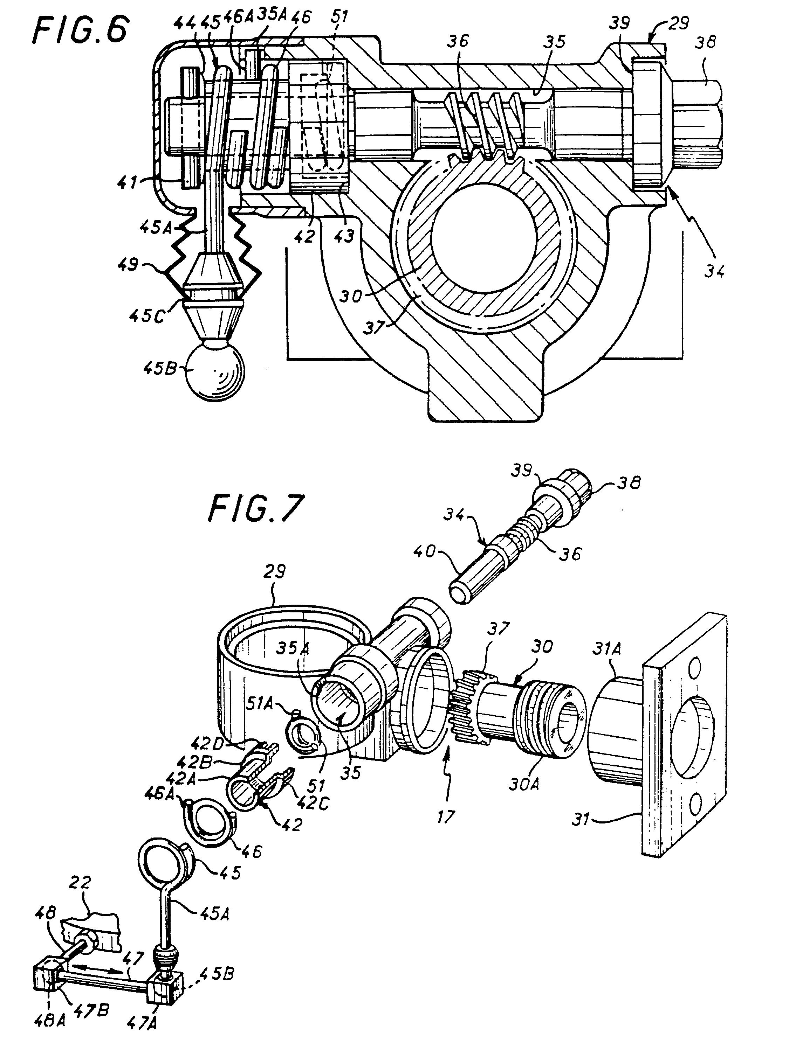

Cet appareil d'accouplement comporte principalement un étrier 11, un levier 16 formant élément de commande, et un poussoir 17. L'étrier 11 comporte une portée 10 adaptée à recevoir l'une, 14A, des plaquettes de frein, au moyen de vis 19 par exemple (voir figures 4 et 5), et deux bras 20, disposés de part ct d'autre du levier 16 et du poussoir 17, reliés par un tourillon 21. Le levier de commande 16 comporte deux branches 22 reliées par un voile transversal 23; ces branches présentent deux portions respectivement parallèles , traversées au voisinage de leurs extrémités libres par le tourillon 21, et deux portions respectivement convergentes se réunissant en une extrémité commune attelée à une partie déployable 13A du dispositif de commande 13. Le poussoir 17 est engagé sur le tourillon 21 d'une manière qui sera détaillée plus loin, et porte en son extrémité la plaquette 14B disposée en regard de la plaquette 14A. Ces plaquettes comportent en pratique une garniture de friction 24 destinée à coopérer avec le disque 12 qui est rapportée, par exemple par collage à une plaque de support 25 adaptée à être fixée de façon amovible soit à l'étrier 11, soit au flasque 31 du poussoir 17.

Par souci de clarté le dispositif de commande 13, l'étrier 11, le disque 12 et les plaquettes de frein 14A et 14B ont été représentés de façon schématique, en traits mixtes, à la figure 1, en sorte de mieux faire apparaître le levier 16 et le poussoir 17.

Le mode d'articulation du poussoir 17 sur le tourillon 21 et sur le levier 16 ressort tout particulièrement des figures 1, 4 et 5. Le levier 16 comporte un tourillon annexe 26 sur lequel est engagé, ainsi que sur le tourillon 21, un noyau cylindrique 27 dont l'axe, orienté perpendiculairement au poussoir 17, est disposé entre ces tourillons. Ce noyau 27 est engagé à glissement dans un évidement 28 du poussoir. De la sorte, lorsque sur la figure 4 la partie déployable 13A du dispositif de commande est poussée vers le bas, elle commande le pivotement du levier 16 autour du tourillon 21. Ce levier provoque, par l'intermédiaire du tourillon annexe 26, une rotation excentrique du noyau 27 autour de ce tourillon 21 qui induit un déplacement vers la droite de l'axe de ce noyau: il en résulte une translation vers la droite du poussoir 17.

Ainsi qu'il apparaît notamment à la figure 5, le poussoir comporte principalement trois parties: un corps de poussoir 29 dans lequel est ménagé l'évidement 28 dans lequel est disposé le noyau 27, un cylindre 30, et un flasque 31 auquel est fixée la plaquette de frein 14B. Le cylindre 30 est attelé axialement, quoique libre en rotation, au corps de poussoir 29, par exemple par une vis 32 engagée par son extrémité dans le corps de poussoir, entourée par un manchon tubulaire de guidage et par des moyens de serrage élastique 33 maintenant axialement le fond du cylindre creux 30 contre le corps de poussoir 29. Ce cylindre est fileté extérieurement près de son extrémité libre 30A formant vis, et est engagé dans un manchon 31A fileté intérieurement solidaire du flasque 31 et formant écrou. Ce flasque de forme globalement rectangulaire est libre axialement quoique bloqué en rotation par coopération d'une de ses tranches 31A contre une plage d'appui et de guidage 11A ménagée sur l'étrier 11.

On comprend aisément qu'une rotation relative entre le cylindre 30 et le corps de poussoir 29, et donc le flasque 31, provoque un vissage ou un dévissage entre ce cylindre et le flasque d'où une variation de la longueur globale du poussoir. Ce poussoir est donc expansible.

La rotation du cylindre 30 est commandée par des moyens de rattrapage d'usure définis ci-dessous en sorte de déplacer, en moyenne, le flasque 31 vers la portée d'appui 18 de l'étrier, au fur et à mesure que les garnitures 24 des plaquettes s'usent (ainsi que pour une moindre part les pistes de frottement du disque 12) de telle sorte que ce flasque, qui commande le serrage des moyens de friction, conserve, entre une configuration de serrage et une configuration inactive, une course aller-retour sensiblement constante.

La rotation du cylindre 30 est provoquée par une vis sans fin 34 maintenue sensiblement fixe axialement dans un logement 35 (figures 6, 7) ménagé transversalement dans le corps du poussoir 29 présentant sur une partie de sa hauteur un filetage 36 adapté à coopérer avec des cannelures 37 ménagées sur la face extérieure du cylindre 30 à l'opposé axialement de son filetage 30A.

La vis sans fin 34, telle qu'elle est représentée sur les figures 6 et 7 comporte principalement une tête hexagonale 38, une collerette d'appui axiale 39 destinée à coopérer avec le corps du poussoir, le tronçon fileté 36 précité, et une portion cylindrique 40 traversée en son extrémité par un alésage diamétral destiné à recevoir une tige transversale de blocage 41. De façon avantageuse la portion cylindrique 40 est adaptée à être engagée à glissement dans une douille 42 présentant un corps 42A bordé par une collerette transversale 42B, elle-même prolongée par une portion tubulaire 42C destinée à ménager un volume annulaire autour de la portion cylindrique 40 de la vis sans fin 34. Le logement 35 ménagé dans le corps de poussoir présente une partie élargie pour recevoir la douille, délimité par une portée transversale 43 destinée à servir d'appui à la tranche à la portion tubulaire 42C. Lorsque la vis sans fin 34 et la douille 42 sont engagées dans le corps de poussoir, un élément élastique de compression axiale 44, tel qu'une rondelle Belleville, est avantageusement disposé entre la tranche du corps 42A de la douille et la tige transversale de blocage 41 de manière à permettre à la vis sans fin un léger débattement axial et pour absorber les tolérances axiales des pièces.

Sur le corps 42A de la douille, sont engagés deux éléments de frottement circonférentiel à effets unidirectionnels respectivement opposés dont l'un 45 est lié au levier de commande et l'autre 46 au corps de poussoir.

Tel que représenté le premier 45 de ces éléments comporte au moins 2/3 de spire de ressort qui ceinture le corps de la douille 42. Cet élément comporte une portion 45A qui s'éloigne de la vis sans fin 34 selon une direction sensiblement parallèle au tourillon 21 et qui se termine par une rotule 45B engagée dans une cavité ménagée dans un bloc 47A porté par une biellette 47 portant en son autre extrémité un bloc 47B dans une cavité duquel est montée une rotule 48A portée par une biellette 48 ancrée par son autre extrémité dans l'un des bras 22 du levier de commande 16. La biellette 47 est sensiblement orientée parallèlement à l'axe du poussoir et la biellette 48 est sensiblement orientée à angle droit par rapport à la biellette 47 et par rapport à la partie 45A de l'élément de frottement circonférentiel 45.

Le second 46 des éléments de frottement circonférentiel comporte de même au moins 2/3 de spire de ressort engagée sur le corps 42A de la douille. Il comporte une extrémité 46A qui s'éloigne dudit corps 42A et qui est adapté à s'engager dans une encoche 35A ménagée axialement à l'entrée de la partie élargie du logement 35, de réception de la douille 42 et de la vis sans fin 34. Telles que représentées, les spires des éléments de frottement circonférentiel 45 et 46 sont enroulées dans le même sens.

En pratique les éléments de frottement circonférentiel 45 et 46 sont protégés par un capuchon élastique 49 qui est monté sur la portée 35 du poussoir 29 et qui se serre sur un logement 45C de l'élément 45 (voir figure 6).

De façon avantageuse un autre élément de frottement circonférentiel 51, selon l'exemple à effet unidirectionnel est engagé sur la vis sans fin 34 en étant lié à la douille. Cet élément comporte de préférence au moins 2/3 de spire de ressort ceinturant la vis 34 dont une extrémité 51A est engagée dans une encoche 42D ménagée axialement dans la portion tubulaire 42C de la douille. Telle que représentée cette spire est enroulée dans un sens opposé à celui des spires des éléments 45 et 46. Cet élément 51 a pour fonction d'empêcher que la vis sans fin ne subisse depuis la douille des couples excessifs d'entraînement; il a également pour rôle de permet tre la rotation de la vis sans fin 34 lors de réglages manuels de sa position angulaire, notamment après un remplacement des plaquettes de frein 14A et 14B, par action sur sa tête hexagonale 38.

En fonctionnement lors d'une phase de freinage, lorsque la course aller du poussoir est à sa valeur de consigne (quelques dixièmes de millimètre en pratique), le pivotement du levier de commande transmis par les biellettes 47 et 48, est consommé par la flexion élastique de la partie 45A de l'élément 45 et par un éventuel jeu angulaire entre l'extrémité 46A de l'élément 46 et l'encoche 35A qui la reçoit. Il n'y a pas d'usure à rattraper.

Si par contre, du fait d'une usure, la course aller du poussoir dépasse sa valeur de consigne, le pivotement du levier de commande provoque, outre une flexion de la partie 45A de l'élément 45, un déroulement de la spire de ressort associée (du fait de son sens d'enroulement), ce qui provoque un glissement angulaire de cette spire vis-à-vis de cette douille. Du fait de son sens d'enroulement la spire de ressort de l'élément 46 tend à "étrangler" la douille et en empêche toute rotation sous l'effet de l'élément 45. Lors de la phase ultérieure de desserrage de frein, l'élément 45 tend à étrangler la douille et à la faire tourner (dans le sens des aiguilles d'une montre à la figure 7), ce à quoi l'élément 46 ne tend pas à s'opposer du fait que cette rotation tend à élargir sa spire de ressort. Cette rotation de la douille tend à accentuer l'effet de serrage de l'élément 51 sur la vis sans fin 34 qui est ainsi entraînée à son tour et qui peut ainsi provoquer la rotation du cylindre 30 en sorte d'allonger le poussoir. On peut vérifier que si par action sur la tête hexagonale on venait à faire tourner la vis sans fin 34 dans le sens inverse des aiguilles d'une montre, l'élément 51 n'opposerait qu'une faible résistance tandis qu'un couple excessif appliqué par la douille à cet élément le ferait glisser sur la vis 34 qui opposerait alors une résistance superieure au frottement appliqué par l'élément 51 qui joue donc un rôle de limiteur de couple à friction.

En pratique le couple appliqué par l'élément 45 est supérieur à la somme du couple appliqué par l'élément 46 lorsqu'il relâche son étranglement et des divers frottements de la chaîne mécanique de transmission d'effets.

En fait le rattrapage d'usure par rotation du cylindre 30 n'est pas toujours immédiatement possible. L'élément élastique de compression axiale 44 a alors pour intérêt de permettre à la vis 34 de tourner sous l'action de l'élément 51 en décrivant un mouvement hélicoïdal. La compression de l'élément élastique 44 assure alors une sorte de mise en mémoire de la rotation qu'il conviendra d'appliquer au cylindre 30 dès que cela deviendra possible, au cours d'une ou de plusieurs phases de serrage-desserrage du frein.

Il va de soi que la description qui précède n'a été proposée qu'à titre non limitatif et que de nombreuses variantes peuvent être proposées par l'homme de l'art sans sortir du cadre de l'invention. Ainsi, notamment, l'organe rotatif constitué par la vis sans fin et la douille peut en variante être remplacé par une pièce unique, ou la liaison entre la douille et la vis sans fin peut être modifiée dans sa structure. Le nombre de spires des éléments 45 et 46 peut être modifié, et ils peuvent de même se prêter à de nombreuses variantes de structure; en variante par exemple ils peuvent être engagés dans une partie tubulaire de la douille; en autre variante, le frottement peut intervenir entre les éléments 45 et 46 et l'élément de commande et le poussoir, respectivement. Le sens d'enroulement des spires, lorsque ces éléments 45 et 46 en comportent peut varier d'un élément à l'autre (en fonction par exemple du bras 22 auquel est rapportée la biellette 48). L'élément de serrage des moyens de friction n'est pas toujours porté par l'extrémité avant du poussoir une liaison mécanique plus complexe peut être préférée dans certains cas.

**Revendications**

1. Appareil d'accouplement par friction à rattrapage d'usure, tel que par exemple un frein destiné à accoupler par friction un étrier auquel il est lié à une pièce extérieure (12) telle que par exemple un disque, comportant des moyens de friction (14A, 14B) adaptés à porter à volonté contre ladite pièce extérieure et un dispositif de rattrapage de l'usure de ces moyens de friction, adapté à maintenir à une valeur sensiblement constante la course aller-retour d'un élément (31) de serrage lié à un poussoir expansible (17) actionné par un élément de commande (16), ce poussoir expansible étant adapté, en cas d'usure desdits moyens de friction à s'allonger sous la commande d'un organe rotatif (34, 42) logé dans ledit poussoir et couplé par pignonnerie à un élément (30) de celui-ci, cet organe rotatif étant par ailleurs couplé par un mécanisme audit élément de commande (16), caractérisé en ce que ce mécanisme comporte deux éléments de frottement circonférentiel (45, 46) à effets unidirectionnels opposés dont l'un (46) lié au poussoir est monté sur ledit organe rotatif (34, 42) dans une position tendant à le bloquer en rotation par rapport au poussoir lors d'un déplacement aller de ce dernier et dont l'autre (45) lié audit élément de commande (16) est monté sur ledit organe rotatif (34, 42) dans une position tendant à l'entraîner en rotation, lors d'un déplacement de retour dudit poussoir, dans un sens tendant à provoquer l'allongement de ce poussoir et en ce que ledit mécanisme comporte des moyens (45A, 35A) pour absorber les sollicitations dudit élément de commande (16) lorsque la course dudit poussoir est inférieure à une valeur donnée.

2. Appareil selon la revendication 1, caractérisé en ce que chaque élément de frottement circonférentiel (45, 46) coinporte au moins 2/3 de spire de ressort engagée sur l'organe rotatif (42).

3. Appareil selon la revendication 2, caractérisé en ce que les spires de ressort des éléments de frottement circonférentiel ont le même sens d'enroulement.

4. Appareil selon la revendication 2 ou la revendication 3, caractérisé en ce que l'extrémité (46A) de l'un (46) des éléments de frottement circonférentiel est engagée dans une encoche (35A) ménagée dans le poussoir.

5. Appareil selon la revendication 4, caractérisé en ce que, l'élément de commande étant un levier (16) monté pivotant autour d'un tourillon (21), l'autre (45) des éléments de frottement circonférentiel comporte une partie flexible (45A) sensiblement orientée parallèlement au tourillon (21) et reliée par son extrémité libre (45B) audit levier.

6. Appareil selon l'une quelconque des revendications 1 à 5, caractérisé en ce que l'organe rotatif comporte une vis sans fin (34) adaptée à commander un allongement du poussoir et une douille (42) engagée à glissement sur cette vis et coopérant avec lesdits éléments de frottement circonférentiel (45, 46), un troisième élément de frottement circonférentiel à effet, de préférence, unidirectionnel (51) étant disposé entre la douille et la vis sans fin en sorte de ne transmettre à la vis, depuis la douille, des couples d'entraînement en rotation tout en en limitant l'amplitude.

7. Appareil selon la revendication 6, caractérisé en ce que ledit troisième élément de frottement circonférentiel (51) comporte au moins 2/3 de spire de ressort engagée sur la vis sans fin (34) dont une extrémité (51A) est engagée dans une encoche (42D) de ladite douille.

8. Appareil selon la revendication 6 ou la revendication 7, caractérisé en ce que la vis sans fin (34) est mobile axialement à l'encontre d'un élément élastique de compression (44).

9. Appareil selon l'une quelconque des revendications 1 à 8, caractérisé en ce que le poussoir (17) comporte un corps de poussoir (29) dans lequel est engagé ledit organe rotatif (34, 42) et un cylindre formant vis (30) engagé par vissage dans une partie-écrou (31A), le cylindre étant libre en rotation mais attelé axialement au corps de poussoir, en étant placé sous le contrôle de l'organe rotatif (34) tandis que la partie-écrou, solidaire de l'élément (31) de serrage des moyens de friction, est mobile axialement mais bloquée en rotation.

**Patentansprüche**

1. Reibungskupplungsgerät mit Nachstellvorrichtung, zum Beispiel eine Bremse, zum Festlegen durch Reibschluß eines mit ihr fest verbundenen Bügels an ein äußeres Teil (12), z. B. eine Scheibe, mit Reibmitteln (14A, 14B), die ausgebildet sind, nach Belieben gegen das äußere Teil (12) zu drücken, und mit einer Vorrichtung zum Nachstellen des Verschleisses dieser Reibmittel, die ausgestaltet ist, um den Vorwärts- und den Rückwärtsweg eines mit einem ausfahrbaren Vordrücker, der durch ein Steuerelement (16) betätigt wird, verbundenen Klemmelements (31) bei einem im wesentlichen konstanten Wert zu halten, welcher ausdehnbare Vordrücker (17) ausgebildet ist, im Falle eines Verschleisses der Reibmittel sich unter der Steuerung eines in dem Vordrücker angeordneten dehnbaren Organs (34, 42) zu verlängern, wobei das drehbare Organ über ein Getriebe mit einem Element (30) des Vordrückers und des weiteren über einen Mechanismus mit dem Steuerelement (16) gekoppelt ist, dadurch gekenzeichnet, daß der Mechanismus zwei Umfangsreibungselemente (45, 46) mit einander entgegengesetzt gerichteter Wirkung aufweist, von denen das eine (46), das mit dem Vordrücker (17) verbunden ist, in einer Stellung auf dem drehbaren Organ (34, 42) angeordnet ist, in der es danach trachtet, dieses während einer Verschiebung des Vordrückers nach vorne bei der Drehung in Bezug auf den Vordrücker zu blockieren, und von denen das andere (45), das mit dem Steuerelement (16) verbunden ist, auf dem drehbaren Organ (34, 42) in einer Stellung angeordnet ist, in der es danach trachtet, dieses während einer Rückwärtsverschiebung des Vordrückers in einem Richtungssinn zu verdrehen, in dem eine Verlängerung des Vordrückers hervorgerufen wird, und daß der Mechanismus Mittel (45A, 35A) zum Absorbieren der Belastungen des Steuerelements (16) aufweist, wenn der Weg des Vordrückers unterhalb eines gegebenen Werts liegt.

2. Gerät nach Anspruch 1, dadurch gekennzeichnet, daß jedes Umfangsreibungselement (45, 46) zumindest zwei Drittel einer Spirale einer Schraubenfeder aufweist, die auf dem drehbaren Organ (42) aufgesetzt ist.

3. Gerät nach Anspruch 2, dadurch gekennzeichnet, daß die Spiralen der Schraubenfeder der Umfangsreibungselemente die selbe Windungsrichtung aufweisen.

4. Gerät nach Anspruch 2 oder 3, dadurch gekennzeichnet, daß das Ende (46A) des einen (46) der Umfangsreibungselemte in einer in dem Vordrücker (17) ausgebildeten Einkerbung (35A) eingesetzt ist.

5. Gerät nach Anspruch 4, dadurch gekennzeichnet, daß das Steuerelement ein um einen Zapfen (21) drehbar angeordneter Hebel (16) ist und daß das andere (45) der Umfangsreibungselemente einen flexiblen Teil (45A) aufweist, der im wesentlichen parallel zum Zapfen (21) orientiert und über sein freies Ende (45B) mit dem Hebel verbunden ist.

6. Gerät nach mindestens einem der Ansprüche 1 bis 5, dadurch gekennzeichnet, daß das drehbare Organ eine Schnecke (34) besitzt, die ausgebildet ist, eine Verlängerung des Vordrückers zu steuern sowie eine verschiebbar auf der Schnecke angeordnete und mit den Umfangsreibungsmitteln (45, 46) zusammenwirkende Hülse, und daß ein drittes Umfangsreibungselement (51) mit vorzugsweise einseitig gerichteter Wirkung derart zwischen der Hülse und der Schnecke angeordnet ist, daß von der Hülse nur zur Schnecke ein Antriebsdrehmoment durch Rotation übertragen wird, wobei dessen Größe begrenzt wird.

7. Gerät nach Anspruch 6, dadurch gekennzeichnet, daß das dritte Umfangsreibungselement (51) zumindest eine Zweidrittelwindung einer Schraubenfeder aufweist, die auf die Schnecke (34) aufgesetzt ist und von der ein Ende ( 51A) in einer Vertiefung (42D) in der Hülse eingesetzt ist.

8. Gerät nach Anspruch 6 oder 7, dadurch gekennzeichnet, daß die Schnecke (34) gegen ein druckelastisches Element (44) axial bewegbar ist.

9. Gerät nach mindestens eines der Ansprüche 1 bis 8, dadurch gekennzeichnet, daß der Vordrücker einen Drückerkörper (29) aufweist, in dem das drehbare Organ (34, 42) und ein Zylinder, der eine in ein Muttern-Teil (31A) eingeschraubte Schraube (30) bildet, eingesetzt sind, wobei der Zylinder frei drehbar, jedoch axial am Drückerkörper festgelegt ist und unter Steuerung des drehbaren Organs (34) verschiebbar ist, während das Mutternteil, das mit dem Klemmelement (31) der Reibmittel fest verbunden ist, axial bewegbar, jedoch gegen Drehung blockert ist.

## Claims

1. A friction coupling with wear compensation, such as for example a brake adapted to couple through friction a yoke member to which it is attached to an external member (12) such as for example a disc, comprising friction means (14A, 14B) adapted to bear as required against the said external member and a device for compensating wear in the said friction means, adapted to maintain substantially constant the forward and return travel of a clamping member (31) linked to an extendable plunger (17) operated by a control member (16), this extendable plunger being adapted in case of wear of the said means of friction to elongate itself as a result of the action of a rotary member (34, 42) housed in the said plunger and connected by a cog wheel coupling to a member (30) thereof, the rotary member being additionally coupled through a mechanism to the said control member (16), characterized in that the mechanism comprises two circumferentially-acting friction members (45, 46) with unidirectional effects in opposite directions, one of which (46), connected to the plunger, is mounted on the said rotary member (34, 42) in a position tending to prevent it rotating relative to the plunger during a forward stroke of the latter, and the other of which (45), connected to the said control member (16), is mounted on the said rotary member (34, 42) in a position tending to rotate it during a return stroke of the said plunger, in a direction tending to extend the said plunger, and in that the said mechanism comprises means (45A, 35A) to absorb forces applied by the said control member (16) when the travel of the said plunger is below a specified value.

2. A friction coupling according to Claim 1, characterized in that each circumferentially-acting friction member (45, 46) comprises at least two-thirds of a turn of a spring wound round the said rotary member.

3. A friction coupling according to Claim 2, characterized in that the turns of the springs of the circumferentially-acting friction members are wound in the same direction.

4. A friction coupling according to Claim 2 or Claim 3, characterized in that the end (46A) of one (46) of the circumferentially-acting friction members is engaged in a notch (35A) made in the plunger.

5. A friction coupling according to Claim 2, characterized in that, the control member being a lever (16) mounted to pivot around a shaft (21), the other (45) of the circumferentially-acting friction members comprises a flexible part (45A) orientated substantially parallel to the shaft (21) and connected by its free end (45B) to the said lever.

6. A friction coupling according to any one of Claims 1 to 5, characterized in that the rotary member comprises a lead screw (34) adapted to control an extension of the plunger and a bush (42) which slides on this lead screw and cooperates with the said circumferentially-acting friction members (45, 46), and a third circumferentially-acting friction member (51), preferably having a unidirectional action, is disposed between the bush and the lead screw so as to transmit rotational torques from the bush to the lead screw, whilst limiting their amplitude.

7. A friction coupling according to Claim 6, characterized in that the said third circumferentially-acting friction member (51) comprises at least two-thirds of a turn of a spring engaged on the lead screw (34) one end of which spring (51A) is engaged in a notch (42D) of the said bush.

8. A friction coupling according to Claim 6 or Claim 7, characterized in that the lead screw (34) is movable axially against the action of an elastic compression member (44)

9. A friction coupling according to any one of Claims 1 to 8, characterized in that the plunger (17) comprises a plunger body (29) in which the said rotary member (34, 42) is engaged and an externally threaded cylinder (30) engaged by screwing into a threaded part (31A), the cylinder being free to rotate but being axially fixed to the plunger body so that it is placed under the control of the rotary member (34), whereas the threaded part, fastened to the clamping member (31) of the means of friction, is movable axially but prevented from rotating.

# FIG. 1

# FIG. 2

# FIG. 3

3

# FIG.4

# FIG.5

0 186 535

FIG.6

FIG.7